# EUROPEAN PATENT SPECIFICATION

(11) **EP 1 972 785 B1**
(45) Date of publication and mention of the grant of the patent: **20.07.2011**
(21) Application number: 08200004.3
(22) Date of filing: 12.02.2008
(51) Int. Cl.: F04C 18/344, F16K 3/24, F16K 15/02

(54) **Check valve for a vacuum pump**
Rückschlagventil für Vakuumpumpen
Clapet de retenue pour pompe à vide

(30) Priority: 20.03.2007 GB 0705228
(43) Date of publication of application: 24.09.2008
(73) Proprietor: Ford Global Technologies, LLC, Dearborn, MI 48126 (US); JAGUAR CARS LIMITED, Whitley Coventry Warwickshire CV3 4LF (GB)
(72) Inventor: Zhou, Quanbao, Rugby, Warwickshire, CV22 6JZ (GB)
(74) Representative: Grunfeld, David Peter

(56) References cited:
- EP-A- 0 406 800
- EP-A- 0 515 929
- WO-A-91/03646
- DE-A1- 3 033 082
- GB-A- 212 228
- GB-A- 1 265 208
- GB-A- 2 363 168
- JP-A- 62 174 591
- JP-A- 2001 271 771
- JP-A- 2004 360 571

## Description

The present invention relates to vacuum pumps having forced oil lubrication principally for automotive vehicle applications and in particular to a check valve for such a vacuum pump as defined in the preamble of claim 1. Such a check valve is known eg from WO 91/03646.

Vehicles often comprise components that are vacuum operated, an important example being servo-assisted brakes. In a vehicle having a conventional spark-ignition engine, a partial vacuum is present in the part of the intake manifold downstream of the main throttle and no special steps need to be taken to provide a vacuum source. There are however several cases when manifold vacuum cannot be relied upon as a vacuum source. For example, in any variant of a vehicle fitted with a diesel engine there is no manifold vacuum, because diesel engines operate with wide open throttle and load is varied not by throttling the air intake but by metering the quantity of fuel directly or indirectly injected into the cylinders. Likewise electrically driven vehicles and vehicles with hybrid drive systems may not always have a vacuum source available at all times.

For these reasons, vacuum pumps for use in automotive vehicles have been proposed previously and these fall into two categories, namely engine driven pumps and electrically driven pumps.

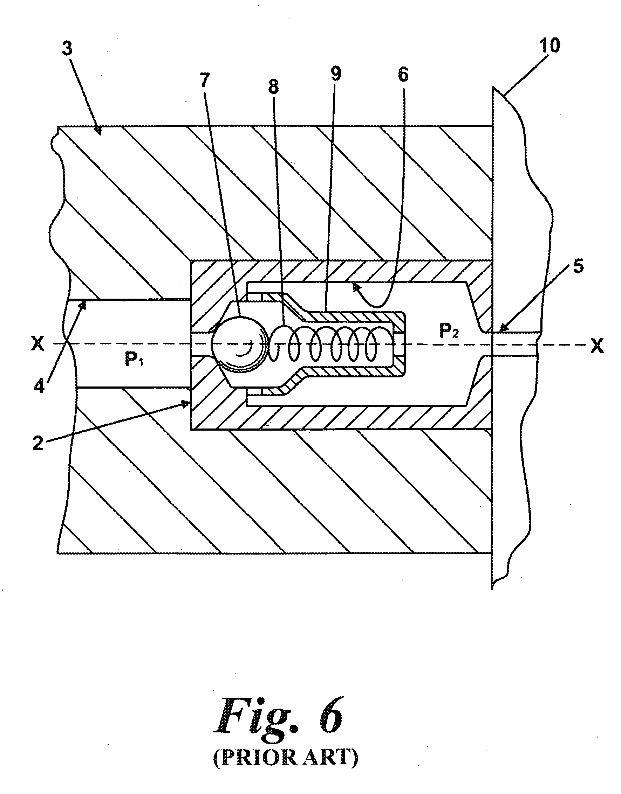

It is known to provide an oil check valve to prevent the backflow of oil from the vacuum pump to the oil supply from the engine. Such a check valve is shown in Fig.6 of the accompanying drawing.

The check valve has a housing 2 supported by a shaft 3 connected to a rotor of a sliding vane vacuum pump. A positive oil supply passage 4 communicates with a valve chamber 6 defined by the housing 2 when a valve member in the form of a check valve ball 7 is moved away from its seat. A spring 8 located in a spring housing 9 is used to bias the check valve ball 7 against a seat as shown in Fig.6. An oil inlet passage 5 is also in fluid communication with the valve chamber 6.

The oil inlet passage 5 supplies oil to interior components of the vacuum pump and so, when the pump is operating, is maintained at a pressure of approximately minus 1 bar (relative to atmospheric pressure).

Therefore during normal running of the vacuum pump the check valve ball is subject to the positive pressure P1 of the oil feed in the oil supply passage 4 to one side and the minus 1 bar pressure P2 (vacuum) in the inlet supply passage 5 to the other side. This differential pressure is sufficient to move the valve check ball 7 away from its seat so as to permit oil to flow to the interior of the vacuum pump. The arrangement of the check valve is such that a pressure differential of 1 bar is sufficient to lift the valve check ball 7 from its seat so that as soon as the vacuum pump starts to operate oil can be drawn in through the inlet passage 5 even if the pressure in the oil supply passage is at or close to atmospheric pressure.

It is a problem with this arrangement that even after the pump is stopped, the pressure in the oil inlet passage 5 can remain at minus 1 bar for a very long time. Therefore, even if the oil feed pressure P1 in the oil supply passage 4 has dropped to zero, the check valve ball 7 could still be in a partially open position for some time due to the minus 1 bar pressure (vacuum) in the inlet passage 5. The consequence of this is that oil can be drawn into the vacuum pump for a long period of time causing hydraulic lock within the vacuum pump. The next time the vacuum pump is started damage to the vacuum pump will often occur.

In order to overcome this problem it is known from WO 91/03646 to provide a check valve for a vacuum pump having a rotary pumping element connected to an oil supply, the check valve being rotatable with the rotary pumping element and having a valve member movable against the action of a spring by centrifugal force when the rotary pumping element rotates so as to selectively open an oil inlet passage to the vacuum pump, the valve member has an end face and is movable against the action of the spring by a combination of centrifugal force and the oil supply pressure acting upon the end face of the valve member, the rotary pumping element being rotatable about an axis of rotation and the check valve further comprising a valve housing, the valve member being slideably supported in a valve chamber formed by the valve housing so as to be slideable along a slide axis, the spring biasing the valve member into a closed position where it closes off the oil inlet passage to the vacuum pump and the slide axis of the check valve being inclined relative to the axis of rotation of the rotary pumping element and the oil supply is connected to the valve chamber by an oil supply passage so that, when the valve member is in the closed position, the valve chamber remains in fluid communication with the oil supply passage.

It is an object of this invention to provide an improved check valve for a vacuum pump.

The invention is characterised over that disclosed in WO91/03646 in that the valve housing is formed by a support shaft for the rotary pump element that is rotatable about the axis of rotation, an end cap is fastened to the valve housing to provide an end stop for the valve member thereby determining the closed position of the valve member and in that the said oil supply passage is arranged such that, when the valve member is in said closed position determined by said end stop, the oil pressure acting on the valve member acts on a part of the total area of the said end face and on a side portion of the said valve member at right angles to its slide axis.

Preferably, the slide axis may be arranged at a right angle with respect to the axis of rotation so as to maximise the centrifugal force on the valve member. The spring may react between a further end cap fastened to the support shaft and the valve member.

The valve member may have an end face and a tubular body portion extending away from the end face and the spring may be located within the tubular body portion of the valve member. The further end cap may have a vent passage formed therein so that the interior of the tubular body portion of the valve member is maintained at atmospheric pressure.

According to a second aspect of the invention there is provided a vacuum pump for a motor vehicle driven by an oil lubricated internal combustion engine, the vacuum pump comprising a rotary pumping element, a drive means for driving the rotary pumping element, an oil supply from the engine for interior lubrication of the vacuum pump and a check valve constructed in accordance with said first aspect of the invention.

The rotary pumping element may comprise a rotor and at least one sliding vane.

The drive means may comprises one of a chain drive from the engine of the motor vehicle, a belt drive from the engine of the motor vehicle, a hydraulic motor, a pneumatic motor and an electric motor.

The invention will now be described by way of example with reference to the accompanying drawing of which:-
Fig.1 is a transverse section through a sliding vane vacuum pump according to the invention;
Fig.2 is a longitudinal section through the pump shown in Fig.1 showing in dotted outline the location of a check valve according to the invention;
Fig.3 is a cross-section through the check valve shown in Fig.2 showing a valve member in an open position;
Fig.4 is an enlarged cross-section similar to Fig.3, showing the valve member in a closed position;
Fig.5 is a longitudinal cross-section similar to Fig.2 showing an alternative type of vacuum pump and the location of a check valve according to the invention when used with such a pump; and
Fig.6 is a cross-section through a prior art check valve.

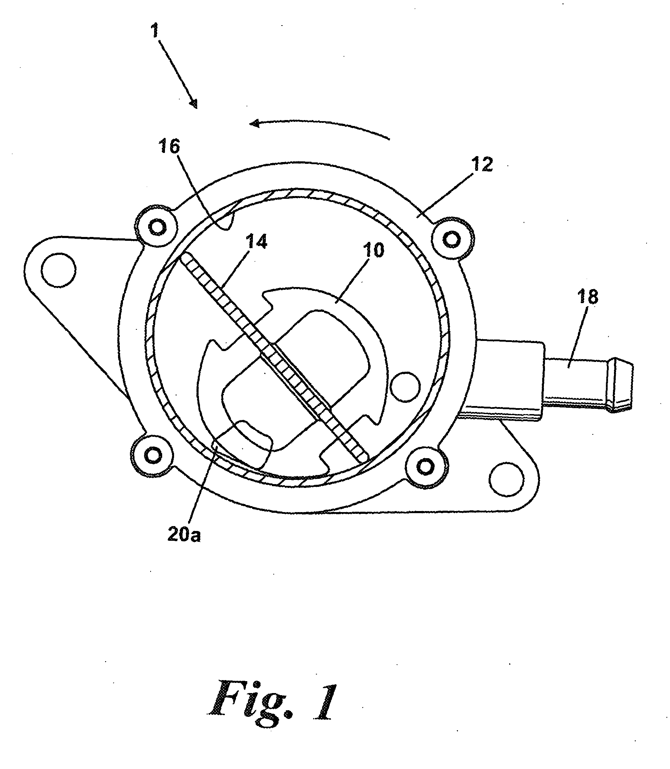

Referring firstly to Figure 1 there is shown a single vane vacuum pump 1 having a rotary pumping element comprising a rotor 10 mounted eccentrically within a housing 12 having an inner surface defining a pump chamber 16 and a single flat vane 14 slideably mounted diametrically with a close running clearance within the rotor 10. The shape of the pump chamber 16 is such that the opposite ends of the vane 14 make sealing contact with the surface of the pump chamber 16 in all angular positions of the rotor 10. It will be appreciated that the vacuum pump could have several vanes supported by the rotor. The outer surface of the rotor 10 makes sealing contact with the surface of the pump chamber 16 at the six o'clock position as shown in Fig. 1.

The vacuum pump 1 also has an air inlet passage 18 containing an anti-oil migration valve which, for a pump in which the rotor 10 is driven counterclockwise (as represented by the arrow in Figure 1), communicates with the variable volume working chamber defined to the right of the rotor 10.

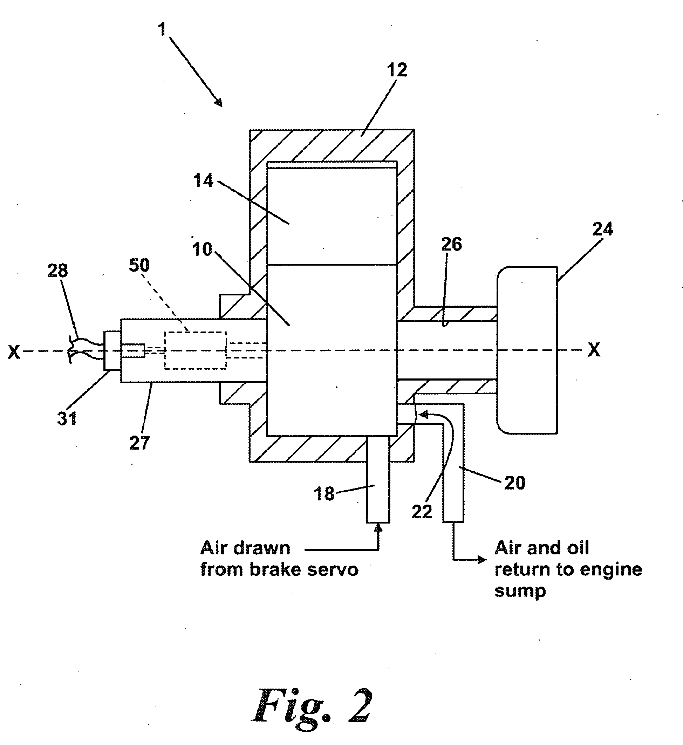

The vacuum pump 1 also has an exhaust port 20a that communicates with the working chamber to the left of the rotor as viewed and with an outlet or exhaust conduit 20 (shown in Figure 2). A non-return valve 22 (shown in Figure 2) is arranged in the exhaust passage 20 such that air and oil can flow out of the pump chamber 16 but cannot flow in the opposite direction.

In operation, as the rotor 10 turns counter clockwise, the volume of the working chamber to the right of the rotor 10 is bounded by the rotor 10, the surface of the pump chamber 16 and the vane 14 increases and draws air in from the suction port. In the other working chamber, the same air is compressed and forced out of the exhaust port 20a past the non-return valve 22 into the exhaust conduit 20.

In the application of such a vacuum pump to an automotive vehicle having an oil lubricated engine, the air may be drawn from a brake servo of the motor vehicle and the air and oil flowing through the exhaust conduit may be returned to a sump of an engine fitted to the motor vehicle and oil is supplied to the vacuum pump 1 from a lubrication circuit of the engine.

Although a rotary vane pumping element is shown and described it will be appreciated that the invention can be applied to alternative designs of pump.

As shown in Figure 2, the pump 1 is driven by a drive member in the form of a pulley 24 which is driven by a belt or chain from the engine of the motor vehicle. The pulley 24 is driveably connected to the rotor 10 by a drive shaft 26 supported by bearings (not shown) located in the housing 12.

The vacuum pump 1 is connected to the lubrication circuit of the engine by means of a low pressure oil supply pipe 28. The oil from the engine passes through a check valve 50 and ultimately flows to the vacuum side of the rotor 10 where the oil is atomised into a fine mist carried by the pumped air to lubricate the moving parts of the pump 1.

The check valve 50 is located in a support shaft 27 which forms a check valve housing and rotates with the rotor 10 about a common axis of rotation X-X. The support shaft 27 is rotatably supported by the pump housing 12 by one or more bearings (not shown).

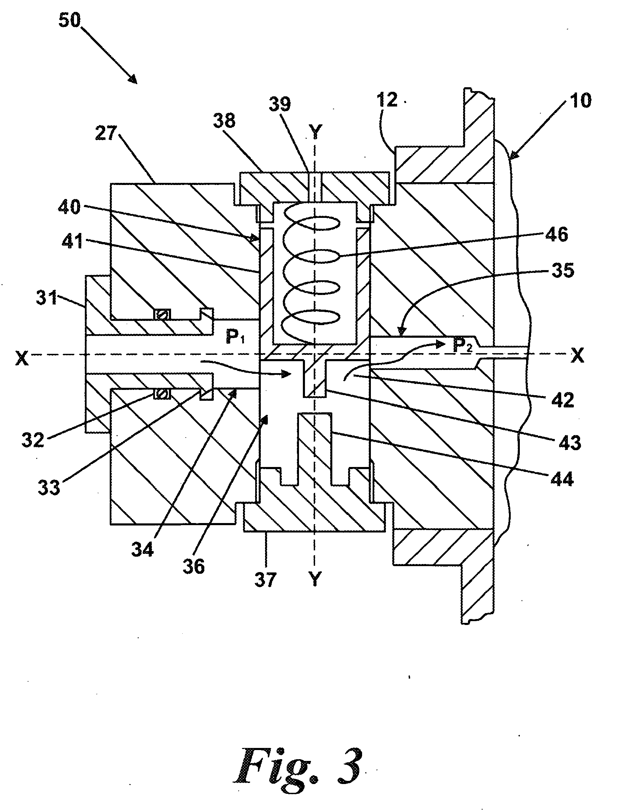

As shown in Figure 3, the shaft 27 forming the check valve housing defines an oil supply passage 34 connected via a rotatable connector 31 to the low pressure oil supply pipe 28, an oil inlet passage 35 connected to the interior of the vacuum pump 1 and a valve chamber 36 in which is slidingly supported a valve member 40.

The rotatable connector 31 is rotatably connected to the oil supply passage 34 by a snap connector 33 and is sealed by a seal 32.

The valve member 40 has an end face 42 from which extends a cylindrical projection 43 and a tubular body portion 41. A spring 46 is located within the tubular body portion 41 and reacts between the valve member 40 and a first end cap 38 threadingly fastened to the shaft 27 to close off one end of the valve chamber 36. The end cap 38 has a through vent passage 39 formed therein to ensure that the interior of the tubular body portion 41 always remains at atmospheric pressure.

A second end cap 37 is threadingly fastened to the shaft 27 to close off the opposite end of the valve chamber 36 to the end closed by the first end cap 38. The second end cap 37 has a projection 44 formed therein on for co-operation with the cylindrical projection 43 on the valve member 40 so as to define an end stop defining the closed position of the valve member 40.

The valve member 40 is slideable along a slide axis Y-Y which is in this case arranged to be at a right angle with respect to the axis of rotation X-X so as to maximise the centrifugal force applied to the valve member 40 when the shaft 27 rotates with the rotor 10. It will be appreciated that the slide axis Y-Y could be arranged at a different angle to the axis of rotation such as for example 45 degrees but it is preferred to arrange the slide axis at 90 degrees as this maximises the centrifugal force produced when the shaft 27 rotates.

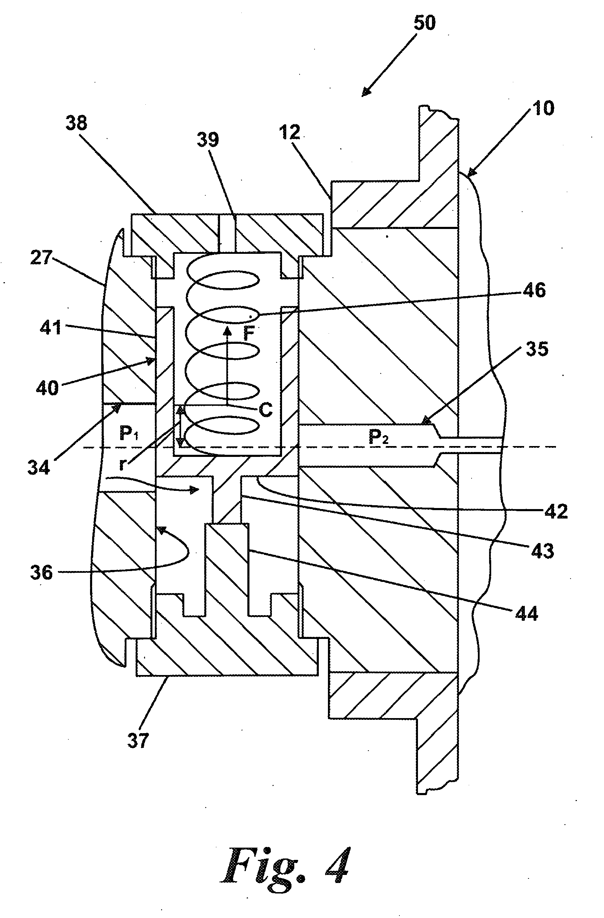

Operation of the check valve is as follows. When, as is shown in Fig.4, the rotor 10 is not rotating, the valve member 40 is moved by the spring 46 to a closed position in which the cylindrical projection 43 abuts against the projection 44. In this position the tubular body portion 41 of the check valve 40 closes off the entrance to the oil inlet passage 35 and so oil cannot flow to the interior of the vacuum pump 1. Note that, when the valve member 40 closes off the inlet passage 35, the position of the valve member 40 is unaffected by the pressure within the vacuum pump 1 because the pressure P2 in the inlet passage acts on the side of tubular body portion 41 at a right angle to the slide axis Y-Y of the valve member 40.

When the rotor 10 is not rotating the pressure P1 in the oil supply passage 34 will be approximately atmospheric because the engine will not be operating. That is to say, when driven by the engine, the vacuum pump 1 can only operate while the engine is running.

The force produced by the spring 46 can therefore hold the valve member 40 firmly in its closed position against the end stop in the form of the projection 44 on the second end cap 37.

However, when the engine is started and the rotor 10 begins to rotate a different force balance exists because the valve member 40 is then subject to both oil pressure acting on its end face 42 and to centrifugal force due to its rotation about the axis of rotation X-X.

A force balance then exists in which if the combined force produced by the pressure on the end face and the centrifugal force exceed the force produced by the spring then the valve member 40 will move away from the end stop 44.

The centrifugal force F on the valve member is equal to (sin θ)mrω2 . Where θ is the angle between the slide axis Y-Y and the axis of rotation X-X (sin θ is equal to 1.0 when this angle is 90 degrees), m is the mass of the valve member, r is the distance of the centre of gravity C of the valve member 40 from the axis of rotation X-X and w is the rotational speed of the shaft 27. It will be appreciated that as the valve member 40 moves away from the end stop 44 the centrifugal force F will increase because r will increase. This will compensate for the increase in the force applied by the spring 46 due to its further compression as the valve member 40 moves away from the end stop 44. It will be further appreciated that the centre of gravity C must be on the same side of the axis of rotation as the spring in order for the centrifugal force to act against the spring 46.

The force Fp applied from oil pressure in the valve chamber on the end face 42 of the valve member 40 is equal to the actual pressure in the valve chamber 36 and the surface area of the end face 42.

In the example shown when the valve member is in its fully closed position this force Fp1 will be equal to the total area of the end face 42 minus the area lost due to the contact of the projection 43 with the end stop 44 multiplied by the pressure P1 in the supply passage.

However, when the valve member 40 moves away from the end stop 44, the force Fp2 produced by oil pressure will be equal to the total area of the end face 42 multiplied by the pressure P1 in the supply passage and, when the inlet passage 35 is uncovered, the force Fp3 will be equal to the total area of the end face 42 multiplied by the pressure in the valve chamber 36 which will be a pressure lower than the pressure P1 in the supply passage 34 but higher than the pressure P2 in the inlet passage 35.

When the shaft 27 begins to rotate the centrifugal force F produced will in combination with the force Fp1 exceed the force produced by the spring 46 and the valve member 40 will move away from the end stop 44.

As soon as the valve member moves away from the end stop 44 the force produced by the oil in the supply passage will increase to Fp2 thereby rapidly moving the valve member 40 away from its closed position.

In this way it can be ensured that no oil can flow to the vacuum pump until it is rotating thereby preventing hydraulic lock from occurring within the vacuum pump 1.

In an alternative to the above the supply passage 34 can be arranged to be closed when the valve member 40 moves to its closed position. This can be achieved by making the supply passage 34 the same size as the inlet passage 35 or by realigning the supply passage 34. In this case, the moving of the valve member 40 away from its closed position is achieved solely by the application of centrifugal force until the supply passage 34 is uncovered.

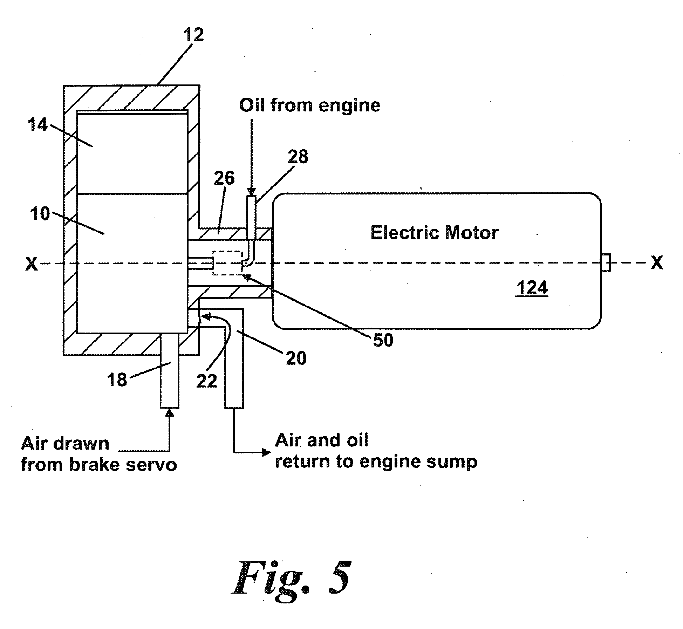

Referring now to Fig.5 there is shown an alternative vacuum pump to that shown in Figs.1 and 2. The vacuum pump differs in that it is of a cantilever support type having support bearings (not shown) on only one side of the rotor 10. In this case the check valve 50 is located in the drive shaft 26. The drive shaft 26 therefore forms a housing for the check valve 50. The check valve 50 is identical to that shown in Figs.3 and 4 and operates in exactly the same manner. As before, a low pressure oil supply pipe 28 from an engine is connected to the check valve 50 and the check valve member 50 prevents the backflow of oil from the vacuum pump, an air inlet 18 containing an anti-oil migration valve is provided and an outlet conduit 20 having a non-return valve 22 is arranged such that air and oil can flow out of the vacuum pump but cannot flow in the opposite direction.

A further difference between this embodiment and that shown in Figs.1 and 2 is that the vacuum pump is independently driven by an electric motor 124. It will however be appreciated that the electric motor 124 could be replaced by a hydraulic motor or a pneumatic motor. One advantage of using an electric motor is that it is able to provide a high vacuum even when the engine of the motor vehicle is operating slowly.

In an alternative design which is the same as the design shown in Fig.2 with the exception that the valve housing does not rotate with the rotor 10 but remains stationary. The check valve has a valve member slideably supported in a valve chamber and moved by a spring to a closed position. The valve member is moved against the action of the spring by the oil supply pressure acting upon an end face of the valve member in order to open the oil inlet passage to the vacuum pump. When the valve member is in a closed position, the valve member is arranged to be unaffected by the pressure in an oil inlet passage connected to the vacuum pump by arranging for a side of the valve member to close off the oil inlet passage. In this way the pressure in the oil inlet passage cannot act on the end face of the valve member to affect its position until the valve member has uncovered the oil inlet passage. The valve member is moved to an open position solely by the action of the pressure in the valve chamber acting on the end face of the valve member.

It will be appreciated by those skilled in the art that although the invention has been described by way of example with reference to one or more embodiments it is not limited to the disclosed embodiments and that one or more modifications to the disclosed embodiments or alternative embodiments could be constructed if without departing from the scope of the invention as defined in the appended claims.

## Claims

1. A check valve (50) for a vacuum pump (1) having a rotary pumping element (10, 14) connected to an oil supply, the check valve (50) being rotatable with the rotary pumping element (10, 14) and having a valve member (40) movable against the action of a spring (46) by centrifugal force when the rotary pumping element rotates so as to selectively open an oil inlet passage (35) to the vacuum pump (1), the valve member (40) has an end face (42) and is movable against the action of the spring (46) by a combination of centrifugal force and the oil supply pressure acting upon the end face (42) of the valve member (40), the rotary pumping element (10, 14) being rotatable about an axis of rotation and the check valve (50) further comprising a valve housing (27), the valve member (40) being slideably supported in a valve chamber (36) formed by the valve housing (27) so as to be slideable along a slide axis, the spring (46) biasing the valve member (40) into a closed position where it closes off the oil inlet passage (35) to the vacuum pump (1) and the slide axis of the check valve (50) being inclined relative to the axis of rotation of the rotary pumping element (10, 14), and the oil supply being connected to the valve chamber (36) by an oil supply passage (34) so that when the valve member (40) is in the closed position, the valve chamber (36) remains in fluid communication with the oil supply passage (34), **characterised in that** the valve housing is formed by a support shaft (27) for the rotary pump element (10, 14) that is rotatable about the axis of rotation, an end cap (37) is fastened to the support shaft (27) to provide an end stop (44) for the valve member (40) thereby determining the closed position of the valve member (40) and **in that** the said oil supply passage (34) is arranged such that, when the valve member (40) is in said closed position determined by said end stop (44), the oil pressure acting on the valve member (40) acts on a part of the total area of the said end face (42) and on a side portion (41) of the said valve member (40) at right angles to its slide axis (Y-Y).

2. A check valve as claimed in claim 1 wherein the slide axis is arranged at a right angle with respect to the axis of rotation so as to maximise the centrifugal force on the valve member (40).

3. A check valve as claimed in claim 1 or in claim 2 wherein the spring (46) reacts between a further end cap (38) fastened to the support shaft (27) and the valve member (40).

4. A check valve as claimed in any preceding claim wherein the valve member (40) has an end face and a tubular body portion (41) extending away from the end face (42) and the spring (46) is located within the tubular body portion (41) of the valve member (40).

5. A check valve as claimed in claim 4 when dependant upon claim 3 wherein the end cap (38) has a vent passage (39) formed therein so that the interior of the tubular body portion (41) of the valve member (40) is maintained at atmospheric pressure.

6. A vacuum pump (1) for a motor vehicle driven by an oil lubricated internal combustion engine, the vacuum pump (1) comprising a rotary pumping element (10, 14), a drive means (24) for driving the rotary pumping element (10, 14), an oil supply from the engine for interior lubrication of the vacuum pump (1) and a check valve (50) as claimed in any of claims 1 to 5.

7. A vacuum pump as claimed in claim 6 wherein the rotary pumping element comprises a rotor (10) and at least one sliding vane (14).

## Patentansprüche

1. Rückschlagventil (50) für eine Vakuumpumpe (1) mit einem umlaufenden Pumpelement (10, 14), das mit einer Ölversorgung verbunden ist, wobei das Rückschlagventil (50) mit dem umlaufenden Pumpelement (10, 14) drehbar ist und ein Ventilglied (40) aufweist, das gegen die Wirkung einer Feder (46) durch Zentrifugalkraft beweglich ist, wenn sich das umlaufende Pumpelement dreht, um einen Öleinlasskanal (35) zur Vakuumpumpe (1) gezielt zu öffnen, wobei das Ventilglied (40) eine Endfläche (42) aufweist und durch eine Kombination von Zentrifugalkraft und Ölversorgungsdruck, die auf die Endfläche (42) des Ventilglieds (40) wirken, gegen die Wirkung der Feder (46) beweglich ist, wobei das umlaufende Pumpelement (10, 14) um eine Drehachse drehbar ist und das Rückschlagventil (50) weiterhin ein Ventilgehäuse (27) umfasst, wobei das Ventilglied (40) in einer durch das Ventilgehäuse (27) gebildeten Ventilkammer (36) so verschiebbar gestützt wird, dass es entlang einer Gleitachse verschiebbar ist, wobei die Feder (46) das Ventilglied (40) in eine geschlossene Stellung vorspannt, in der es den Öleinlasskanal (35) zur Vakuumpumpe (1) verschließt, und die Gleitachse des Rückschlagventils (50) bezüglich der Drehachse des umlaufenden Pumpelements (10, 14) geneigt ist und die Ölversorgung durch einen Ölversorgungskanal (34) mit der Ventilkammer (36) verbunden ist, so dass, wenn sich das Ventilglied (40) in der geschlossenen Stellung befindet, die Ventilkammer (36) in Strömungsverbindung mit dem Ölversorgungskanal (34) bleibt, **dadurch gekennzeichnet, dass** das Ventilgehäuse durch eine Stützwelle (27) für das umlaufende Pumpelement (10, 14) gebildet wird, das um die Drehachse drehbar ist, eine Endkappe (37) an der Stützwelle (27) befestigt ist, um einen Endanschlag (44) für das Ventilglied (40) bereitzustellen, wodurch die geschlossene Stellung des Ventilglieds (40) bestimmt wird, und dass der Ölversorgungskanal (34) so angeordnet ist, dass, wenn sich das Ventilglied (40) in der geschlossenen Stellung befindet, die durch den Endanschlag (44) bestimmt wird, der auf das Ventilglied (40) wirkende Öldruck auf einen Teil der Gesamtfläche der Endfläche (42) und auf einen Seitenteil (41) des Ventilglieds (40) in einem rechten Winkel zu seiner Gleitachse (Y-Y) wirkt.

2. Rückschlagventil nach Anspruch 1, wobei die Gleitachse in einem rechten Winkel bezüglich der Drehachse angeordnet ist, um die Zentrifugalkraft auf das Ventilglied (40) zu maximieren.

3. Rückschlagventil nach Anspruch 1 oder 2, wobei die Feder (46) zwischen einer an der Stützwelle (27) befestigten weiteren Endkappe (38) und dem Ventilglied (40) reagiert.

4. Rückschlagventil nach einem vorhergehenden Anspruch, wobei das Ventilglied (40) eine Endfläche und einen röhrenförmigen Körperteil (41), der sich von der Endfläche (42) weg erstreckt, aufweist, und die Feder (46) in dem röhrenförmigen Körperteil (41) des Ventilglieds (40) positioniert ist.

5. Rückschlagventil nach Anspruch 4, sofern von Anspruch 3 abhängig, wobei die Endkappe (38) einen darin ausgebildeten Lüftungskanal (39) aufweist, so dass das Innere des röhrenförmigen Körperteils (41) des Ventilglieds (40) auf Atmosphärendruck gehalten wird.

6. Vakuumpumpe (1) für ein Kraftfahrzeug, die durch einen ölgeschmierten Verbrennungsmotor angetrieben wird, wobei die Vakuumpumpe (1) ein umlaufendes Pumpelement (10, 14), ein Antriebsmittel (24) zum Antrieb des umlaufenden Pumpelements (10, 14), eine Ölversorgung von dem Motor zur Innenschmierung der Vakuumpumpe (1) und ein Rückschlagventil (50) nach einem der Ansprüche 1 bis 5 umfasst.

7. Vakuumpumpe nach Anspruch 6, wobei das umlaufende Pumpelement einen Rotor (10) und mindestens einen Gleitflügel (14) umfasst.

## Revendications

1. Clapet de retenue (50) pour une pompe à vide (1) ayant un élément de pompage rotatif (10, 14) connecté à une alimentation en huile, le clapet de retenue (50) pouvant tourner avec l'élément de pompage rotatif (10, 14) et ayant un organe de clapet (40) déplaçable à l'encontre de l'action d'un ressort (46) sous l'effet de la force centrifuge lorsque l'élément de pompage rotatif tourne, afin d'ouvrir de manière sélective un passage d'entrée d'huile (35) vers la pompe à vide (1), l'organe de clapet (40) ayant une face d'extrémité (42) et pouvant être déplacé à l'encontre de l'action du ressort (46) par une combinaison de la force centrifuge et de la pression d'alimentation en huile agissant sur la face d'extrémité (42) de l'organe de clapet (40), l'élément de pompage rotatif (10, 14) pouvant tourner autour d'un axe de rotation et le clapet de retenue (50) comprenant en outre un boîtier de clapet (27), l'organe de clapet (40) étant supporté à coulissement dans une chambre de clapet (36) formée par le boîtier de clapet (27) de manière à pouvoir coulisser le long d'un axe de coulissement, le ressort (46) poussant l'organe de clapet (40) dans une position fermée où il ferme le passage d'entrée d'huile (35) vers la pompe à vide (1) et l'axe de coulissement du clapet de retenue (50) étant incliné par rapport à l'axe de rotation de l'élément de pompage rotatif (10, 14), et l'alimentation en huile étant connectée à la chambre de clapet (36) par un passage d'alimentation en huile (34) de telle sorte que lorsque l'organe de clapet (40) est dans la position fermée, la chambre de clapet (36) reste en communication fluidique avec le passage d'alimentation en huile (34), **caractérisé en ce que** le boîtier de clapet est formé par une tige de support (27) pour l'élément de pompage rotatif (10, 14) qui peut tourner autour de l'axe de rotation, un capuchon d'extrémité (37) est fixé à la tige de support (27) pour fournir une butée de fin de course (44) pour l'organe de clapet (40) en déterminant ainsi la position fermée de l'organe de clapet (40), et **en ce que** ledit passage d'alimentation en huile (34) est agencé de telle sorte que lorsque l'organe de clapet (40) est dans ladite position fermée déterminée par ladite butée de fin de course (44), la pression d'huile agissant sur l'organe de clapet (40) agisse sur une partie de la surface totale de ladite face d'extrémité (42) et sur une portion latérale (41) dudit organe de clapet (40) à angle droit par rapport à son axe de coulissement (Y-Y).

2. Clapet de retenue selon la revendication 1, dans lequel l'axe de coulissement est agencé à angle droit par rapport à l'axe de rotation de manière à maximiser la force centrifuge sur l'organe de clapet (40).

3. Clapet de retenue selon la revendication 1 ou la revendication 2, dans lequel le ressort (46) réagit entre un capuchon d'extrémité supplémentaire (38) fixé à la tige de support (27) et l'organe de clapet (40).

4. Clapet de retenue selon l'une quelconque des revendications précédentes, dans lequel l'organe de clapet (40) a une face d'extrémité et une portion de corps tubulaire (41) s'étendant à l'écart de la face d'extrémité (42) et le ressort (46) est situé à l'intérieur de la portion de corps tubulaire (41) de l'organe de clapet (40).

5. Clapet de retenue selon la revendication 4 lorsqu'elle dépend de la revendication 3, dans lequel le capuchon d'extrémité (38) a un passage d'évent (39) formé à l'intérieur de celui-ci, de telle sorte que l'intérieur de la portion de corps tubulaire (41) de l'organe de clapet (40) soit maintenu à la pression atmosphérique.

6. Pompe à vide (1) pour un véhicule à moteur entraîné par un moteur à combustion interne à lubrification à huile, la pompe à vide (1) comprenant un élément de pompage rotatif (10, 14), un moyen d'entraînement (24) pour entraîner l'élément de pompage rotatif (10, 14), une alimentation en huile provenant du moteur pour la lubrification interne de la pompe à vide (1), et un clapet de retenue (50) selon l'une quelconque des revendications 1 à 5.

7. Pompe à vide selon la revendication 6, dans laquelle l'élément de pompage rotatif comprend un rotor (10) et au moins une ailette coulissante (14).
